# FASCICULE DE BREVET EUROPEEN

(11) **EP 2 341 390 B1**
(45) Date de publication et mention de la délivrance du brevet: **07.06.2017**
(21) Numéro de dépôt: 10195569.8
(22) Date de dépôt: 17.12.2010
(51) Int. Cl.: G03B 31/02, G11B 7/003

(54) **Procédé et dispositif de restitution d'un signal sonore et/ou d'une piste sonore**
Verfahren und Vorrichtung zur Reproduktion eines Tonsignals und/oder einer Tonspur
Method of and device for reproduction of an audio signal and/or an audio track

(30) Priorité: 17.12.2009 FR 0959132
(43) Date de publication de la demande: 06.07.2011
(73) Titulaire: Universite De La Rochelle, 17071 La Rochelle (FR)
(72) Inventeur: Besserer, Bernard, 17000 La Rochelle (FR); Decenciere, Etienne, 77210 Avon (FR); HassaÏne, Abdelâali, 77300 Fontainebleau (FR)
(74) Mandataire: Godineau, Valérie

(56) Documents cités:
- WO-A1-03/025914
- WO-A1-2004/099872
- GB-A- 1 372 421
- US-A- 4 124 784
- US-A- 5 526 075
- US-A1- 2003 165 087

## Description

La présente invention concerne de manière générale les pistes sonores présentes sur des supports tels que films ou bandes photographiques.

L'invention concerne plus particulièrement un procédé de restitution d'un signal sonore et/ou d'une piste sonore à partir d'une image numérique acquise d'une piste sonore optique. Ladite image numérique de la piste sonore est formée d'une série de lignes de pixels juxtaposées qui s'étendent transversalement à l'axe de la piste sonore.

L'enregistrement optique est un format usuellement utilisé pour les pistes sonores analogiques de films. Ce format analogique utilise une méthode dite de surface variable, encore appelée modulation de largeur, selon laquelle le flux lumineux issu d'une source de lumière calibrée passe à travers un obturateur dont le taux d'ouverture et de fermeture à un instant donné est modulé par le signal audio, en particulier selon son intensité. Autrement dit, l'obturateur s'ouvre proportionnellement à l'intensité ou au niveau du signal audio, ce qui entraîne une modulation en largeur du flux lumineux issu de la source de lumière. Ce flux lumineux modulé en largeur est dirigé de manière à exposer le film ou la bande photographique. Une fois cette opération réalisée, le film présente une forme en vague, par exemple noire, correspondant au signal audio, les bords latéraux de la vague étant délimités par le matériau du film non exposé qui est le plus souvent transparent. De cette façon, l'amplitude du signal audio instantané est représentée par la largeur de la piste du film exposé.

Une autre méthode dite de densité variable peut être utilisée pour enregistrer de manière analogique des pistes sonores sur un film. Selon cette méthode, la largeur totale de la piste sonore est exposée mais selon des valeurs de transmission lumineuse qui varient en fonction de l'intensité du signal. Ainsi, certaines zones, en fonction de l'intensité du signal, sont plus transparentes que d'autres le long de la piste. Chaque ligne de la piste présente une même largeur, c'est-à-dire que la piste est exposée sur toute sa largeur, mais chaque ligne présente une densité fonction de l'intensité du signal audio à l'instant d'enregistrement. Les caractéristiques de transmission lumineuse dépendent de l'exposition plus ou moins importante de la piste. La quantité de lumière reçue par le film correspond à la densité de la zone correspondante du film. Ainsi, dans le cas d'une modulation en densité, l'amplitude du signal audio instantané est représentée par une variation du pouvoir de transmission lumineux à travers la largeur de la piste du film exposé.

Le signal audio ainsi enregistré sur un film peut ensuite être récupéré à l'aide de la méthode inverse, c'est-à-dire avec un détecteur lumineux, la lumière étant reçue par le détecteur à travers la zone du film correspondant à la piste sonore.

Cependant, les pistes sonores optiques ainsi enregistrées peuvent être soumises à des imperfections, des dommages physiques et des contaminations durant l'enregistrement, l'impression et durant la maintenance des films. Des saletés ou poussières peuvent ainsi introduire des instants de bruit aléatoires et des problèmes de transition. De manière similaire, des déchirures ou éclats peuvent altérer la piste et les propriétés de transmission lumineuse de la piste, et entraîner des pics de bruit et des artéfacts.

Des procédés connus de l'état de la technique tentent de corriger les défauts détectés en réalisant une acquisition numérique de l'image de la piste sonore et en modifiant localement les pixels de l'image acquise considérés comme défectueux. Une telle solution est par exemple décrite dans le brevet EP-1.435.092. Cependant, on constate qu'une telle modification locale de pixels considérés comme défectueux est très compliquée à mettre en oeuvre. De telles solutions sont également source d'erreurs importantes. Lorsque, lors du traitement de l'image acquise, un ensemble de pixels donnés correspond à une zone considérée comme défectueuse, il est très difficile de déterminer un algorithme permettant de modifier localement ces pixels pour les rendre conformes à ceux de la piste sonore d'origine. Les pixels modifiés de l'image risquent de ne pas correspondre aux pixels originaux et d'introduire des effets sonores indésirables. En effet, il est très difficile de déterminer les modifications locales à opérer pour un groupe de pixels donnés.

En outre, pour simplifier les calculs de l'algorithme, les procédés de restauration de l'état de la technique convertissent l'image numérique acquise avec différents niveaux de gris, en une image binaire. Il est alors nécessaire, pour limiter l'effet d'aliasing et l'apparition de signaux de haute fréquence, d'avoir une très bonne résolution d'image et donc d'utiliser un système d'acquisition d'image numérique de haute résolution, telle qu'une caméra linéaire de haute définition, dont le coût est élevé. En outre, l'utilisation d'une caméra haute définition implique de traiter un grand nombre de pixels et ainsi augmente les temps de calcul.

Enfin, la binarisation de l'image implique par définition une perte d'information. En particulier, lorsque la piste est modulée en largeur variable, les informations concernant les zones de transition des portions d'une ligne entre la zone centrale de modulation et les zones latérales, de niveaux de gris extrêmes opposés, sont perdues. Or ces informations concernant les zones de transition sont très importantes pour déterminer la largeur d'une ligne donnée qui permet de définir la valeur de modulation du signal sonore et ainsi l'échantillon de signal sonore à l'instant correspondant à ladite ligne. En outre, la binarisation d'une image est très difficilement applicable pour la restitution d'un signal ou d'une piste à partir d'une piste sonore modulée en densité variable car la perte d'information concernant la densité est très importante du fait de la binarisation.

On connaît également du document US 4.124.784 une méthode de détection des zones de transition entre les parties opaques et les parties transparentes de la piste sonore. Il s'agit donc d'une méthode d'analyse locale des zones de transition des lignes de la piste sonore optique. Une telle méthode d'analyse locale des zones de transition n'est pas suffisamment précise pour restituer un signal sonore de qualité, en particulier si la piste présente des déchirures ou des dégradations au niveau desdites zones de transition. Autrement dit, le document US 4.124.784 se contente de détecter les zones de transition pour restituer un signal sonore correspondant, ce qui ne permet pas de retrouver un signal sonore de qualité correspondant au signal sonore d'origine enregistré sur la piste avant usure ou dégradation de celle-ci. Enfin, une telle méthode ne permet pas de restituer le signal sonore d'une piste sonore enregistrée par modulation de densité.

La présente invention a pour but de proposer un procédé et un dispositif de restitution d'un signal sonore et/ou d'une piste sonore, à partir de l'image d'une piste sonore optique, qui correspond au mieux au signal sonore d'origine enregistré sur ladite piste sonore optique.

Un autre but de l'invention est de proposer un procédé et un dispositif de restitution de signal sonore et/ou de piste sonore qui s'applique aussi bien à des pistes sonores modulées en largeur qu'à des pistes sonores modulées en densité.

A cet effet, l'invention a pour objet un procédé de restitution d'un signal sonore et/ou d'une piste sonore à partir d'une image numérique acquise d'une piste sonore optique, ladite image numérique de la piste sonore étant formée d'une série de lignes de pixels juxtaposées qui s'étendent transversalement à l'axe de la piste sonore,
caractérisé en ce qu'il comprend les étapes suivantes :
- pour chaque ligne de l'image acquise de la piste sonore, une étape de comparaison selon au moins un critère prédéfini, de ladite ligne avec chaque ligne dite idéale d'un gabarit numérique formé d'une pluralité de lignes idéales correspondant à des lignes de piste sonore considérées comme idéales, et, en fonction au moins des résultats de comparaison entre ladite ligne de l'image acquise de la piste sonore et les lignes idéales du gabarit, une étape de sélection de l'une desdites lignes idéales,
- une étape de restitution selon laquelle, chaque ligne idéale du gabarit étant associée à un échantillon sonore numérique spécifique, on restitue un signal sonore numérique composé des échantillons sonores numériques associés à l'ensemble des lignes idéales sélectionnées du gabarit,
et/ou une étape de restitution selon laquelle on restitue une image numérique, dite idéale, de piste sonore composée de l'ensemble des lignes idéales sélectionnées du gabarit.

Le gabarit contient un nombre important de configurations de lignes, correspondant à des lignes de piste sonore optique idéales, c'est-à-dire non défectueuses, afin de couvrir le plus grand nombre possible de lignes différentes de piste optique correspondant à une grande variété d'échantillons sonores.

Grâce à la reconstruction d'un signal sonore numérique à partir de lignes idéales d'un gabarit de piste, le signal sonore et/ou la piste sonore correspondant à la piste sonore optique peut être restitué aisément, rapidement et de manière fiable.

La modulation du son d'une ligne correspond à la largeur de la ligne dans le cas d'une modulation en largeur ou à la densité de gris de la ligne pour une modulation en densité.

Il existe une correspondance directe entre une ligne idéale du gabarit et la modulation à un instant donné du signal sonore. En particulier pour le cas d'une restitution de signal sonore, à chaque ligne idéale correspond une valeur numérique représentative de l'amplitude de modulation de la ligne. Chaque valeur numérique est associée à un échantillon sonore. Ainsi, une fois lesdites lignes idéales sélectionnées, les échantillons sonores mémorisés peuvent être ordonnés dans le même ordre que les lignes analysées de l'image acquise de la piste sonore, ce qui permet de restituer en sortie un signal sonore correspondant au signal sonore obtenu par lecture de ladite la piste sonore optique débarrassée de ses défauts.

Le procédé selon l'invention, permet également de former une image numérique de piste sonore dite idéale correspondant à l'image de la piste sonore acquise telle qu'elle devrait être en l'absence de défaut. On peut en particulier prévoir de générer l'image idéale correspondant à l'image acquise de la piste sonore dans le cas où l'on re-photographie la piste sonore.

Contrairement aux procédés connus de l'état de la technique, le procédé selon l'invention permet de restituer le signal sonore de pistes sonores correspondant à différents types de modulation. Le procédé selon l'invention s'applique en particulier aussi bien aux pistes sonores modulées en largeur qu'à celles modulées en densité. En effet, il suffit d'adapter le type de gabarit utilisé en fonction du type de modulation de la piste sonore dont on souhaite restituer le signal sonore et/ou la piste sonore.

En outre, il est à noter qu'une erreur de sélection de ligne idéale n'entraîne pas de défaut important sur le signal sonore numérique restitué ou sur la piste restituée, car la ligne idéale sélectionnée, même si sa valeur de modulation ne correspond pas exactement à la ligne d'origine de la piste sonore optique, présente une valeur de modulation comprise dans une plage plausible de valeurs de modulation.

Selon une caractéristique avantageuse de l'invention, au moins une partie, de préférence chacun, des pixels de l'image acquise de la piste sonore est affecté d'une valeur de niveau de gris comprise dans une plage de valeurs comprenant plus de deux niveaux de gris.

Une telle caractéristique permet de conserver des zones de transition entre les zones de modulation et les bords de la piste, ce qui évite l'effet d'aliasing et l'apparition de signaux sonores de haute fréquence.

Selon une caractéristique avantageuse de l'invention, il est prévu, avant l'étape de comparaison de lignes, une étape d'ajustement entre, d'une part, l'histogramme de niveaux de gris de l'image acquise de la piste sonore, ou de ladite ligne de l'image acquise de la piste sonore, et, d'autre part, un histogramme de niveaux de gris de référence correspondant, de préférence, à l'histogramme de niveaux de gris du gabarit, ou de ladite ligne du gabarit.

L'ajustement d'histogramme permet de redistribuer les niveaux de gris des pixels de chaque ligne de l'image en affectant auxdits pixels de nouvelles valeurs de niveau de gris en fonction d'un modèle de répartition correspondant à l'histogramme de référence. Dans le cas d'une image de piste sonore modulée en largeur, il est ainsi possible de ramener les niveaux de gris extrêmes respectivement dans la zone centrale de modulation et les zones d'extrémité des lignes. Les zones de gris, c'est-à-dire les valeurs intermédiaires entre les valeurs d'extrémité correspondant au noir et au blanc sont alors ramenées dans les zones de transition, ce qui correspond au profil général des pixels des lignes idéales du gabarit. Le blanc et le noir peuvent bien entendu être inversés. Il est également possible de redistribuer les niveaux de gris des pixels du gabarit à partir de la distribution, de préférence estimée en moyenne, des niveaux de gris de l'image acquise de la piste optique. Autrement dit, dans ce cas, on ramène la dynamique du gabarit vers la dynamique (dynamique moyenne estimée) de l'image acquise de la piste optique, cette opération étant effectuée une seule fois, la dynamique du gabarit entier étant alors ajustée à celle de l'image acquise de la piste optique.

Selon une caractéristique avantageuse de l'invention, la comparaison d'une ligne de l'image acquise de la piste sonore avec une ligne idéale du gabarit est réalisée en comparant au moins une partie des pixels, de préférence les pixels, de ladite ligne de la piste sonore avec les pixels correspondants de ladite ligne idéale du gabarit. Autrement dit, on compare chacun desdits pixels d'une ligne de l'image acquise, de position donnée le long de ladite ligne, avec le pixel de la ligne idéale de gabarit occupant sensiblement la même position le long de la ligne idéale.

Selon une caractéristique avantageuse de l'invention, le résultat de la comparaison entre un pixel d'une ligne d'image de la piste sonore et le pixel correspondant d'une ligne idéale du gabarit étant une valeur numérique, celle-ci est pondérée par une fonction de pondération.

Selon une caractéristique avantageuse de l'invention, la fonction de pondération prend en compte des données d'une ou d'au moins une partie des lignes d'image de la piste sonore, voisine(s) de la ligne d'image de la piste sonore en cours de comparaison et/ou des données d'au moins un modèle de ligne prédéfini.

Selon une caractéristique avantageuse de l'invention, la piste sonore dont l'image est acquise est une piste, appelée piste à largeur variable, dont le signal audio est modulé en largeur, et les lignes du gabarit correspondent à des lignes de piste à largeur variable considérées comme idéales.

La solution selon l'invention permet de conserver les zones de transition entre les zones transparentes (ou blanches) et opaques (ou noires) de la piste et ainsi de conserver une information correcte sur la modulation de chaque ligne au cours de la lecture.

Selon une caractéristique avantageuse de l'invention, l'ensemble des pixels formant chaque ligne du gabarit présente un profil (ou courbe) de niveaux de gris en forme générale de trapèze isocèle.

Selon une caractéristique avantageuse de l'invention, la piste sonore dont l'image est acquise est une piste, appelée piste à densité variable, dont le signal audio est modulé en densité, et les lignes du gabarit correspondent à des lignes de piste à densité variable considérées comme étant sans défaut.

L'invention concerne également un dispositif de restitution d'un signal sonore numérique et/ou d'une piste sonore numérique comprenant des moyens de mise en oeuvre du procédé décrit ci-dessus.

En particulier, l'invention concerne également un dispositif de restitution d'un signal sonore numérique et/ou d'une piste sonore numérique à partir d'une image numérique acquise d'une piste sonore optique, ladite image numérique de la piste sonore étant formée d'une série de lignes de pixels juxtaposées qui s'étendent transversalement à l'axe de la piste sonore,
caractérisé en ce qu'il comporte un système de traitement électronique et/ou informatique comprenant :
- des moyens de comparaison aptes à, pour chaque ligne de l'image acquise de la piste sonore, comparer selon au moins un critère prédéfini, ladite ligne avec chaque ligne dite idéale d'un gabarit numérique formé d'une pluralité de lignes idéales correspondant à des lignes de piste sonore considérées comme idéales, et,
- des moyens de sélection aptes à, pour chaque ligne de l'image acquise de la piste sonore et en fonction au moins des résultats de comparaison entre ladite ligne de l'image acquise de la piste sonore et les lignes idéales du gabarit, sélectionner l'une desdites lignes idéales,
- des moyens de restitution configurés pour, chaque ligne idéale du gabarit étant associée à un échantillon sonore numérique spécifique, restituer un signal sonore numérique composé des échantillons sonores numériques associés à l'ensemble des lignes idéales sélectionnées du gabarit,
et/ou, pour restituer une image numérique, dite idéale, de piste sonore composée de l'ensemble des lignes idéales sélectionnées du gabarit.

Selon une caractéristique avantageuse de l'invention, ledit dispositif comprend des moyens d'affectation à au moins une partie, de préférence à chacun, des pixels de l'image acquise de la piste sonore d'une valeur de niveau de gris comprise dans une plage de valeurs comprenant plus de deux niveaux de gris.

Selon une caractéristique avantageuse de l'invention, ledit dispositif comprend des moyens d'ajustement configurés pour, avant l'étape de comparaison de lignes, réaliser un ajustement entre, d'une part, l'histogramme de niveaux de gris de l'image acquise de la piste sonore, ou de ladite ligne de l'image acquise de la piste sonore, et, d'autre part, un histogramme de niveaux de gris de référence correspondant, de préférence, à l'histogramme de niveaux de gris du gabarit, ou de ladite ligne du gabarit.

Selon une caractéristique avantageuse de l'invention, lesdits moyens de comparaison sont configurés pour comparer au moins une partie des pixels, de préférence les pixels, de ladite ligne de la piste sonore avec les pixels correspondants de ladite ligne idéale du gabarit.

Selon une caractéristique avantageuse de l'invention, le résultat de la comparaison entre un pixel d'une ligne d'image de la piste sonore et le pixel correspondant d'une ligne idéale du gabarit étant une valeur numérique, ledit dispositif comprend des moyens de pondération de ladite valeur numérique.

Selon une caractéristique avantageuse de l'invention, lesdits moyens de pondération sont configurés pour prendre en compte des données d'une ou d'au moins une partie des lignes d'image de la piste sonore, voisine(s) de la ligne d'image de la piste sonore en cours de comparaison et/ou des données d'au moins un modèle de ligne prédéfini.

L'invention sera bien comprise à la lecture de la description suivante d'exemples de réalisation, en référence aux dessins annexés dans lesquels :
- la figure 1 est une vue schématique du dispositif de restitution selon l'invention ;
- les figures 2 et 3 sont des vues de pistes sonores optiques de films modulées respectivement en largeur et en densité ;
- la figure 4 est une vue d'un gabarit de lignes idéales correspondant à une modulation de son en largeur ;
- la figure 5 est une vue d'un gabarit de lignes idéales correspondant à une modulation de son en densité ;
- la figure 6 est une vue d'une piste sonore optique modulée en largeur qui présente des défauts ;
- la figure 7 est un graphique montrant une courbe donnant le niveau de gris des pixels d'une ligne de la piste sonore de la figure 6 présentant peu de défauts ;
- la figure 7A est un graphique montrant la courbe de niveau de gris de la ligne de la figure 7 après ajustement de son histogramme de niveau de gris par rapport à un histogramme de référence ;
- la figure 8 est un graphique montrant une courbe donnant le niveau de gris des pixels d'une autre ligne de la piste sonore de la figure 6 présentant des défauts importants ;
- la figure 8A est un graphique montrant la courbe de niveau de gris de la ligne de la figure 8 après ajustement de son histogramme de niveau de gris par rapport à un histogramme de référence ;
- la figure 9 est un graphique montrant la courbe de niveau de gris de la ligne de la figure 7A à laquelle est superposée la courbe de niveau de gris d'une ligne du gabarit, l'erreur calculée entre les deux courbes de niveau de gris étant également représentée sur le graphique ;
- la figure 10 est un graphique montrant la courbe de niveau de gris de la ligne de la figure 8A à laquelle est superposée la courbe de niveau de gris d'une ligne du gabarit, l'erreur calculée entre les deux courbes de niveau de gris étant également représentée sur le graphique.

En référence aux figures et comme rappelé ci-dessus, l'invention concerne un procédé de restitution d'un signal sonore et/ou d'une piste sonore à partir d'une image numérique acquise d'une piste sonore 1, 1' optique, encore appelée piste photographique.

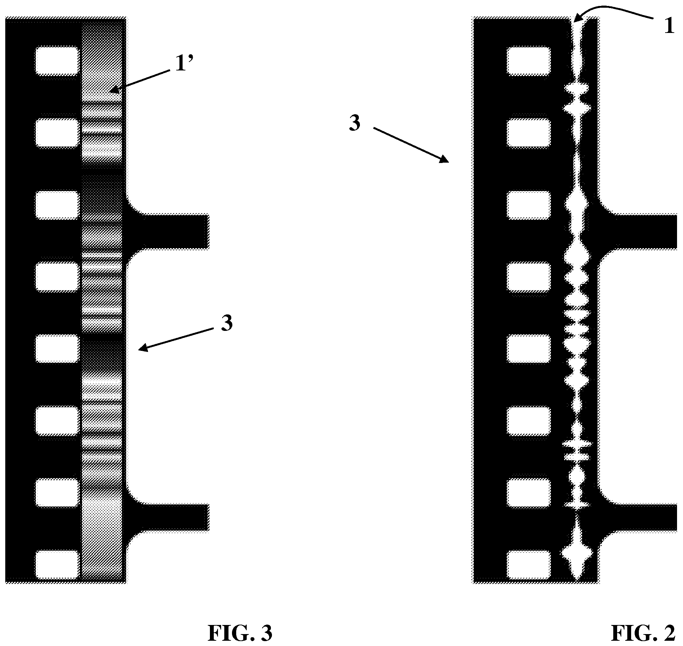

Comme illustré aux figures 2 et 3, ladite piste sonore 1, 1' optique se présente généralement sous la forme d'une bande sur un film 3. Par acquisition d'une image numérique de la piste sonore optique, on entend que l'image de tout ou partie de la piste sonore est acquise. Autrement dit, au moins une partie de l'image de la piste sonore optique est acquise.

Ladite image numérique de la piste sonore 1 optique est formée d'une série de lignes 10, 11 de pixels juxtaposées qui s'étendent transversalement à l'axe de la piste sonore 1. Pour rappel, un pixel correspond à la plus petite partie d'une image produite ou traitée électroniquement. Dans l'exemple illustré aux figures, chaque pixel est associé à une valeur de niveau de gris. Le signal audio de la piste est modulé en amplitude. Dans l'exemple illustré à la figure 2, le signal audio est modulé en largeur et dans l'exemple illustré à la figure 3, le signal audio est modulé en densité.

Dans le cas d'une piste sonore monophonique modulée en largeur, c'est-à-dire avec densité fixe, l'image acquise de ladite piste sonore optique se présente sous la forme générale d'une zone centrale, dite de modulation, qui s'étend le long d'une direction définissant l'axe de la piste sonore. L'axe de la piste est sensiblement parallèle à la direction longitudinale de la bande. Le niveau de gris global de la zone de modulation est proche d'un niveau de gris extrême (par exemple blanc) et cette zone centrale de modulation est délimitée latéralement par deux autres zones qui présentent chacune un niveau de gris proche du niveau de gris extrême (par exemple noir) opposé par rapport à celui de la zone centrale de modulation.

La piste sonore optique se présente généralement sous la forme d'une zone centrale sensiblement transparente formant la zone de modulation, délimitée par deux zones latérales opaques correspondant aux zones de la piste revêtues d'une émulsion lors de l'enregistrement du signal sonore sur la bande. En effet, la piste sonore optique est obtenue à partir d'un procédé photographique au cours duquel un enregistreur impressionne d'abord un négatif, la partie modulée du signal étant alors opaque ou "noire". Puis, à partir de ce négatif, on réalise un positif pour obtenir une copie d'exploitation correspondant à ladite piste optique à numériser dont la partie modulée est alors transparente ou "blanche". En variante, on pourrait prévoir que la zone centrale de modulation soit une zone opaque délimitée par deux zones transparentes.

La description qui suit est détaillée pour une piste monophonique mais s'applique bien entendu à une piste stéréophonique ou polyphonique en la considérant comme la juxtaposition, respectivement, de deux ou plusieurs pistes sonores monophoniques.

Dans l'exemple détaillé ci-après, l'image numérique de la piste sonore est formée d'une zone centrale de modulation, dont le niveau de gris global est proche du blanc, qui est délimitée latéralement par deux zones de niveau de gris global proche du noir. Il est possible que la zone centrale de modulation disparaisse lorsque la ou les lignes correspondantes de la piste sonore sont associées à des instants de silence. En effet, l'enregistrement de la piste sonore peut être réalisé avec un dispositif dit "noiseless" (c'est-à-dire "sans bruit") qui interrompt la modulation en dessous d'une valeur de seuil de niveau sonore.

Ledit procédé comprend les étapes suivantes.

Chaque pixel de l'image acquise de la piste sonore est affecté d'une valeur de niveau de gris comprise dans une plage de valeurs comprenant plus de deux niveaux de gris, les niveaux de gris extrêmes correspondant au noir et au blanc. Autrement dit, ladite plage comprend au moins une valeur intermédiaire entre la valeur associée au noir et la valeur associée au blanc. Préférentiellement, ladite plage contient au moins 256 valeurs. Chaque niveau de gris correspond ainsi à une valeur numérique codée sur un nombre donné de bits. Selon une variante non illustrée, on peut envisager de binariser l'image, c'est-à-dire d'affecter à chaque pixel une valeur noir ou blanc.

L'affectation de niveaux de gris aux pixels de l'image peut en outre être utilisée pour obtenir le négatif de l'image.

Pour chaque ligne 10, 11 de l'image acquise de la piste sonore, on compare selon au moins un critère prédéfini, ladite ligne 10, 11 avec chaque ligne 20, 21 dite idéale d'un gabarit 2 numérique formé d'une pluralité de lignes idéales correspondant à des lignes de piste sonore considérées comme étant sans défaut.

Le gabarit contient un nombre important de configurations de ligne d'une piste sonore optique pour couvrir le plus grand nombre possible de lignes de piste optique différentes que l'on peut rencontrer sur une piste sonore.

Pour une piste sonore modulée en largeur, le gabarit est formé d'un ensemble de lignes considérées comme étant sans défaut et présentant des portions modulées de différentes longueurs de manière à couvrir les différents niveaux de modulation susceptibles d'être rencontrés au cours de l'analyse d'une piste sonore optique.

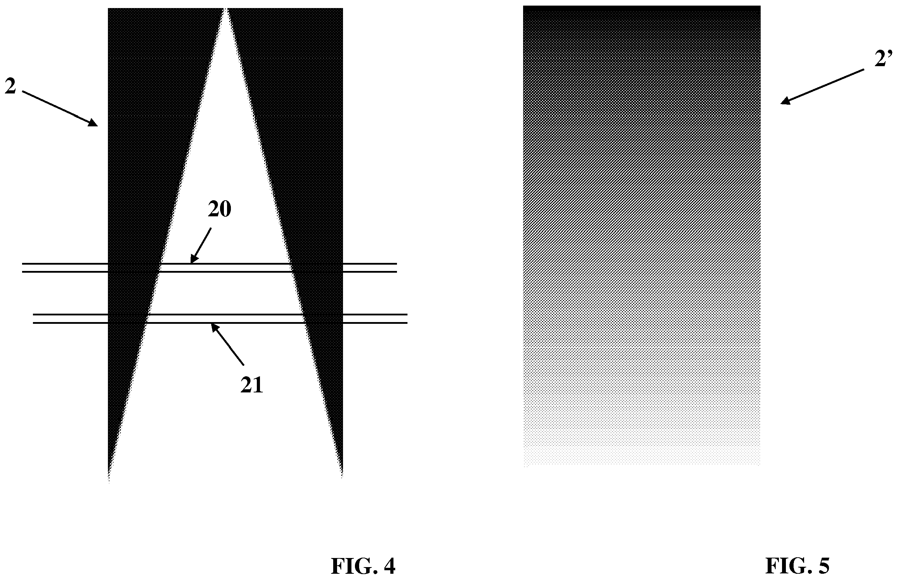

Dans le cas d'une modulation en largeur symétrique, le gabarit de ligne peut être représenté, pour la compréhension, et comme illustré à la figure 4, sous la forme d'un triangle isocèle blanc délimité par deux zones latérales noires. De manière plus générale, pour une modulation en largeur, chaque ligne idéale du gabarit présente globalement une zone centrale d'un niveau de gris extrême donné et de longueur différente d'une ligne à une autre du gabarit, entourée de deux zones d'un niveau de gris extrême opposé par rapport au niveau de gris extrême de la zone centrale. Le niveau de gris de la zone de transition entre chaque portion de ligne de modulation (blanche) et les portions (noires) qui la délimitent sont adaptées pour éviter le phénomène d'aliasing, de telle sorte que chaque ligne du gabarit présente un profil (ou courbe) de niveau de gris en trapèze. Les côtés du trapèze correspondent au niveau de gris des zones de transition entre zone de modulation et zones de délimitation latérales.

Il est possible de générer des gabarits dont les zones de transition entre zone de modulation et zones de délimitation présentent différents profils de niveaux de gris d'un gabarit à un autre. Autrement dit, les pentes des côtés du trapèze formé par le profil (ou courbe) de niveau de gris d'une ligne peuvent varier d'un gabarit à un autre.

Dans l'exemple illustré aux figures 4 et 5, le gabarit comprend une ligne dite de silence présentant sur toute sa longueur un même niveau de gris, ici le niveau de gris extrême correspondant au noir. Cette ligne de silence correspond à une ligne de la piste optique réelle analogique totalement opaque et donc à une absence de modulation de la piste sonore analogique.

Ainsi, la méthode de restitution selon l'invention fonctionne même si la portion modulée de la ligne, ici la partie transparente, disparait, contrairement à d'autres méthodes de l'état de la technique nécessitant la présence de la portion modulée, aussi mince soit-elle, pour effectuer une binarisation ou une segmentation. En effet, ces méthodes de l'état de la technique nécessitent l'utilisation d'un modèle formé d'une partie transparente bordée de parties opaques.

Ledit gabarit présente également une ligne entièrement blanche correspondant à une ligne de la piste optique réelle analogique totalement transparente.

Préférentiellement, avant l'étape de comparaison de lignes, on procède à une étape d'ajustement d'histogramme de niveaux de gris de l'image acquise de la piste sonore, ou de la ligne de l'image acquise de la piste sonore, par rapport à un histogramme de niveaux de gris de référence. L'histogramme de niveaux de gris de référence correspond, de préférence, à l'histogramme de niveaux de gris du gabarit, ou de la ligne du gabarit destinée à être comparée à ladite ligne de l'image acquise. On peut également prévoir à l'inverse d'adapter l'histogramme de niveaux de gris du gabarit à celui de l'image acquise de la piste optique.

Un tel traitement encore appelé spécification d'histogramme est usuellement nommé en anglais "tone mapping". Pour rappel, un histogramme de niveaux de gris correspond à une représentation de la distribution de l'intensité lumineuse d'une image où l'on porte en abscisse les valeurs de niveaux de gris et en ordonnée pour chaque niveau le nombre de points ayant l'intensité correspondant à ce niveau. Autrement dit, la dynamique de niveaux de gris de l'image numérisée de la piste sonore et la dynamique de niveaux de gris du gabarit sont ajustées par mise en correspondance de leurs histogrammes.

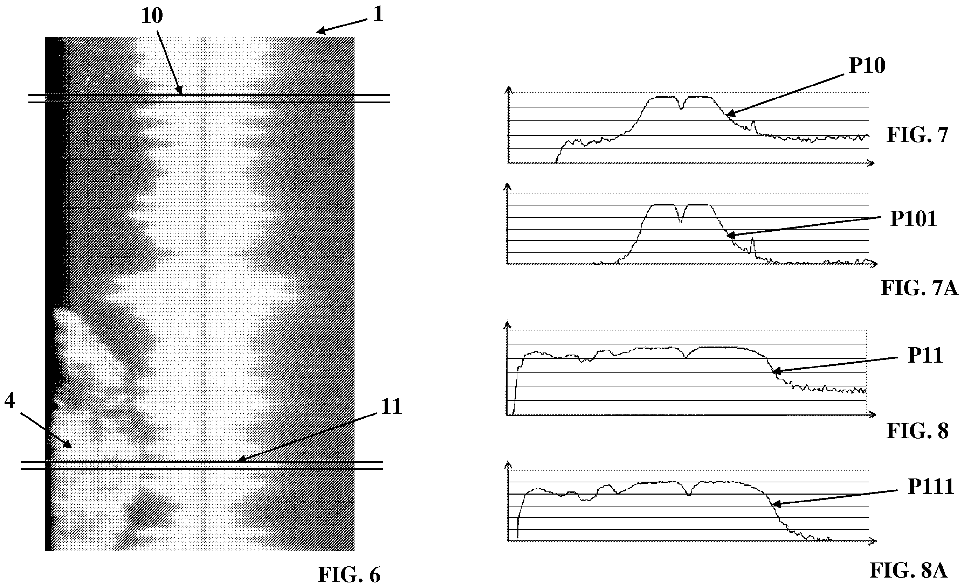

A titre d'exemple, pour la ligne 10 de l'image de la piste sonore optique de la figure 6, dont le profil (ou courbe) de niveau de gris est illustré à la figure 7, on ajuste l'histogramme de niveau de gris de ladite ligne à l'histogramme de la ligne du gabarit 20 qui va servir de base de comparaison.

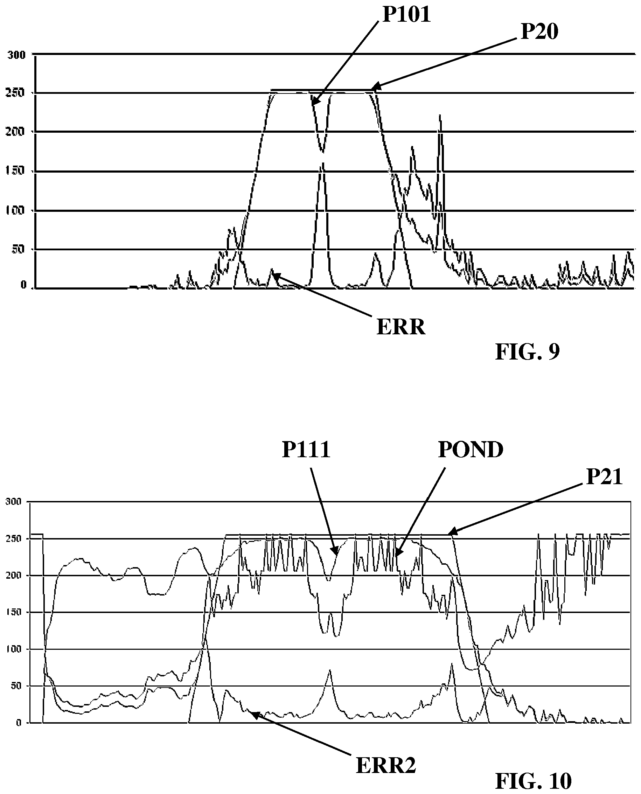

Ainsi, de manière simplifiée, les niveaux de gris des zones gauche et droite du profil P10 de la figure 7, situées de part et d'autre de la zone centrale correspondant au plateau sommet du profil P10 sont ramenés à des niveaux de gris proches des valeurs des zones correspondantes du profil P20 de la ligne 20 du gabarit servant à la comparaison, c'est-à-dire à des valeurs proches du noir. Le profil P20 de ladite ligne 20 est illustré la figure 9. La plage de pixels formant la zone centrale de la ligne est ramenée à des niveaux de gris proches du blanc correspondant aux niveaux de gris de la zone centrale de la ligne modèle. On obtient alors un nouveau profil pour la ligne 10 référencé P101 et illustré à la figure 7A. Cet ajustement d'histogramme permet d'améliorer la pertinence de la comparaison entre la ligne de la piste sonore et la ligne du gabarit utilisée pour la comparaison.

L'étape de comparaison s'effectue de la manière suivante.

Dans le cas où la piste sonore optique présente un axe de symétrie, on choisit un gabarit dont les lignes présentent également un axe de symétrie et on procède à un alignement de l'axe de symétrie de l'image de la piste optique avec l'axe de symétrie du gabarit. Cet alignement peut être effectué de manière informatique et/ou par un opérateur via une interface graphique qui permet d'afficher l'image de la piste sonore optique et l'image du gabarit correspondant.

La comparaison d'une ligne 10, 11 de l'image acquise de la piste sonore 1 avec une ligne idéale 20, 21 du gabarit 2 est réalisée en comparant chaque pixel de ladite ligne 10, 11 de la piste sonore 1 avec le pixel correspondant de ladite ligne idéale 20, 21 du gabarit 2. Le critère de comparaison est ici la valeur associée au niveau de gris de chaque pixel.

La comparaison entre chaque pixel est réalisée en calculant une erreur entre les valeurs desdits pixels. Le calcul d'erreur entre deux pixels peut s'effectuer en calculant la valeur absolue des différences de valeur ou le carré de la différence des valeurs. Une autre métrique d'erreur peut être employée.

L'erreur entre la ligne de l'image de la piste optique et une ligne du gabarit s'obtient alors en sommant les erreurs calculées pour chacun des pixels d'une ligne.

Dans l'exemple illustré à la figure 9, la ligne 10 est comparée à la ligne 20 du gabarit après ajustement d'histogramme, et l'erreur calculée entre les différents pixels est représentée par la courbe ERR. L'erreur entre les deux lignes 10 et 20 correspond à l'intégrale de la courbe ERR.

Une fois la ligne 10 de l'image acquise de la piste sonore comparée aux différentes lignes idéales 20 du gabarit ou d'une partie du gabarit, la ligne idéale correspondant à l'erreur minimale est sélectionnée. De manière équivalente, on peut prévoir de définir un indice de corrélation inversement proportionnel à l'erreur calculée et de sélectionner la ligne idéale du gabarit dont l'indice de corrélation est le plus élevé.

Chaque ligne idéale du gabarit est associée à un échantillon sonore numérique prédéfini. Un échantillon sonore numérique correspond à l'amplitude du signal audio à un instant donné. La valeur de chaque échantillon est codée sur plusieurs bits, au moins 8 bits pour permettre à chaque échantillon de prendre 256 valeurs possibles, et préférentiellement 12 bits ou plus (4096 valeurs possibles ou plus).

La valeur de l'échantillon sonore numérique est directement proportionnelle à la somme des valeurs de niveaux de gris des pixels de ladite ligne idéale. Ainsi, la sélection des lignes idéales du gabarit correspondant le mieux aux lignes de la piste sonore fournit directement une suite de valeurs numériques correspondant à la suite d'échantillons sonores idéaux qui correspond le mieux au signal audio enregistré sur la piste sonore optique en l'absence de défauts.

La sélection des lignes idéales correspondant le mieux aux lignes de l'image acquise de la piste sonore permet de restituer ou constituer un signal sonore composé des échantillons sonores associés à l'ensemble des lignes idéales sélectionnées du gabarit. Le signal sonore est construit ou restitué à partir des échantillons sonores numériques associés aux lignes idéales sélectionnées, en les ordonnant dans le même ordre que les lignes de l'image de la piste optique.

On peut également prévoir de restituer ou constituer une image numérique, dite idéale, de piste sonore composée de l'ensemble des lignes idéales sélectionnées du gabarit, par exemple en vue de rephotographier une piste optique analogique à l'aide d'un imageur ou autre dispositif adapté.

Avantageusement, le résultat de la comparaison entre un pixel d'une ligne 10, 11 d'image de la piste sonore et le pixel correspondant d'une ligne idéale 20, 21 du gabarit est pondéré par une fonction de pondération. Autrement dit, on affecte les différents calculs d'erreur entre les pixels de la ligne de la piste sonore et les pixels de la ligne du gabarit, d'un coefficient indiquant leur importance relative de manière à minimiser l'impact du calcul d'erreur pour les pixels de lignes correspondant à des zones de la piste sonore optique identifiées comme défectueuse.

Chaque erreur calculée entre un pixel d'une ligne d'image de la piste sonore et le pixel correspondant d'une ligne du gabarit est ainsi affecté d'un coefficient de pondération correspondant à la probabilité de validité de l'erreur calculée.

La fonction de pondération peut prendre en compte des données prédéfinies, encore appelées "connaissances à priori". Ces connaissances à priori peuvent être formées des données d'un modèle de ligne prédéfini. Dans le cas d'une piste sonore modulée en largeur, lesdites données comprennent par exemple le nombre et/ou l'ordre de transition des niveaux de gris extrêmes (noir-blanc et blanc-noir) attendus. Dans le cas d'une piste sonore modulée de manière symétrique, la fonction de pondération peut, à partir de la comparaison des deux côtés de la piste entre eux, déterminer la présence de défauts.

En particulier, il est possible de vérifier par un algorithme que chaque ligne composant l'image acquise de la piste sonore respecte bien un modèle de construction. Ainsi, dans le cas d'une piste modulée en largeur, il est possible de déterminer le nombre et l'ordre des transitions de niveau de gris de chaque ligne, ce qui permet de vérifier comme dans l'exemple illustré aux figures 2 et 6 si chaque ligne est formée d'une portion centrale de niveau de gris proche d'une valeur extrême donnée (c'est-à-dire proche de la valeur correspondant au blanc) délimitée par deux autres portions de niveau de gris proches d'une valeur extrême opposée (c'est-à-dire proche de la valeur correspondant au noir). Le résultat de cette première vérification permet de détecter la présence de défauts et peut être utilisé par la fonction de pondération.

La fonction de pondération peut prendre en compte également des données acquises au cours de l'analyse de la piste sonore, telles que des données correspondant à la ou au moins une partie des lignes précédemment analysées. En particulier, on peut prévoir que la fonction de pondération tienne compte des caractéristiques des lignes d'image voisines, par exemple adjacentes, de la ligne d'image de la piste sonore en cours de comparaison. Dans le cas d'une piste sonore modulée en largeur, lesdites caractéristiques des lignes prises en compte par la fonction de pondération peuvent comprendre par exemple la longueur de la zone de modulation, et/ou le nombre et l'ordre des transitions de niveaux de gris.

La fonction de pondération peut également tenir compte de la variation de modulation des lignes les unes par rapport aux autres. En effet, en fonction de la fréquence de capture du signal sonore enregistré sur la piste sonore, la fonction de pondération peut identifier la présence de défaut lorsque la modulation présente des valeurs de variation supérieures à une valeur seuil donnée. La fonction de pondération peut également tenir compte de données statistiques établies au cours de l'analyse des lignes de la piste sonore. Les données statistiques peuvent comprendre par exemple la moyenne des erreurs mesurées entre les lignes de la piste sonore et les lignes idéales sélectionnées, les plus grandes erreurs mesurées, la fréquence maximale de modulation. La fonction de pondération peut également faire appel à des outils morphologiques permettant de détecter et localiser certains types de défauts tels que des poussières.

Une telle pondération est particulièrement intéressante lorsque la piste présente des défauts importants.

Les figures 8, 8A et 10 illustrent l'analyse d'une ligne 11 de l'image de la piste sonore optique de la figure 6, prise dans une zone présentant un défaut important 4, ici une moisissure, qui a supprimé une partie de la zone de gauche sur la figure 6 de la piste sonore optique et fait ainsi apparaître des zones de niveau de gris proche du blanc qui, en l'absence de défaut, ne devraient pas être présentes.

Comme expliqué ci-dessus, l'histogramme de niveau de gris du profil P11 de la ligne 11 illustré à la figure 8 est ajusté par rapport à l'histogramme de niveau de gris de la ligne 21 servant à la comparaison, ce qui permet d'obtenir un nouveau profil de niveau de gris P111 illustré à la figure 8A dont la dynamique est plus proche de celle du profil de la ligne 21, ce qui améliore la pertinence du résultat de la comparaison.

Ainsi pour l'exemple de la ligne 11 de la piste de la figure 6, le profil de niveau de gris montre un défaut manifeste du côté gauche de ladite ligne (par référence à l'image de la figure 6), alors que la ligne devrait présenter un profil symétrique. Comme illustré à la figure 10, la fonction de pondération POND permet de minimiser le poids des valeurs d'erreur calculées pour le côté gauche du profil P111 de ladite ligne 11 par rapport au profil P21 de la ligne idéale 21 du gabarit 2. En effet, la partie gauche du profil P111 ne correspond pas au modèle de transition noir-blanc attendu dans cette zone. Autrement dit, la fonction de pondération permet de privilégier les résultats de comparaison entre le côté droit de la piste et le côté droit du gabarit correspondant, par rapport à la comparaison côté gauche, pour améliorer la pertinence de la sélection de ligne idéale du gabarit. Ainsi, comme illustré à la figure 10, l'erreur ERR2 entre les pixels de la ligne 11 et les pixels de la ligne 21 correspondante du gabarit 2, pondérée par ladite fonction de pondération POND, est faible, ce qui permet à l'algorithme de sélectionner la ligne idéale 21 du gabarit qui correspond bien à la ligne idéale qui s'approche le mieux de la ligne 11 en l'absence de défaut.

Une ou plusieurs fonctions de pondération peuvent être prédéfinies pour chaque gabarit. L'opérateur peut alors en fonction de la piste acquise et du gabarit utilisé sélectionner la fonction de pondération la mieux adaptée.

Dans le cas d'une piste sonore modulée en densité, référencée 1' à la figure 3, le gabarit 2' utilisé est formé de lignes de piste à densité variable considérées comme étant sans défaut (voir figure 5). Chaque ligne idéale présente un niveau de gris constant le long de la ligne, mais le niveau de gris varie d'une ligne idéale à une autre. Le gabarit regroupe un grand nombre de lignes pour disposer de la plus grande variété possible de niveaux de gris. Comme précédemment, à chaque ligne idéale correspondant à un niveau de gris donné, est associé un échantillon sonore.

On peut prévoir dans ce cas que la fonction de pondération soit basée sur l'écart entre la valeur de niveau de gris d'un pixel de la ligne de la piste sonore analysée et la valeur médiane des valeurs de niveau de gris des pixels de ladite ligne.

Comme rappelé ci-dessus, dans le cas d'une piste stéréophonique, ladite piste est considérée comme la juxtaposition de deux pistes (ou voies) monophoniques. Il est ainsi possible de mettre en oeuvre le procédé tel que décrit ci-dessus pour chacune de ces pistes. Le gabarit utilisé pour l'étape de comparaison peut être le même pour chacune des deux pistes.

L'invention concerne également un dispositif 8 de restitution comprenant des moyens de mise en oeuvre d'un procédé de restitution de signal sonore et/ou de piste sonore tel que décrit ci-dessus.

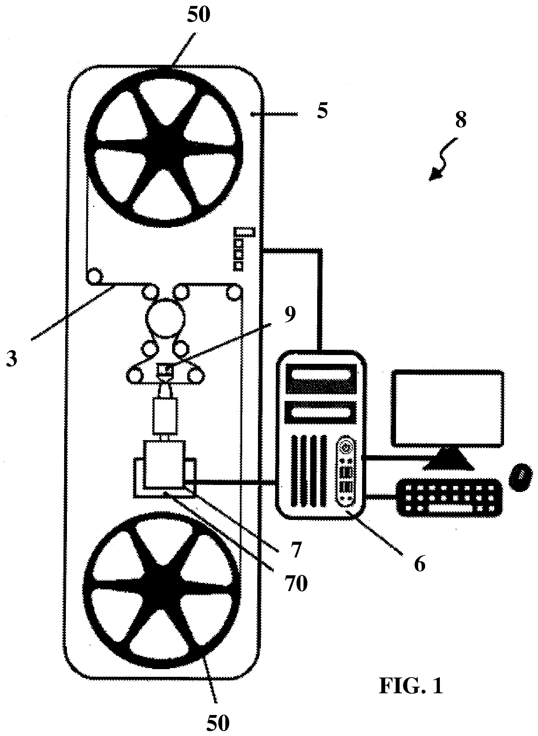

Le dispositif, présenté à la figure 1, comprend des moyens de défilement de la bande 3 pourvue de la piste sonore et des moyens d'éclairage 9 formés d'une source lumineuse, et des moyens de guidage de la lumière selon un rai de lumière. Ainsi, dans l'exemple illustré aux figures, la source lumineuse est disposée derrière une fente ménagée dans un masque de manière à ne laisser passer qu'un rai de lumière. Le rai de lumière est destiné comme détaillé ci-après à éclairer une ligne de la piste sonore optique correspondant à un instant donné du signal audio enregistré sur la piste sonore optique.

La fente s'étend dans un plan parallèle au plan de défilement de la bande devant la fente et est orientée orthogonalement à l'axe de ladite piste sonore défilant devant la fente de manière à éclairer une ligne de la piste sonore. En variante, le système de masque à fente peut être remplacé par une lentille. La source lumineuse peut être une diode électroluminescente (LED) de puissance.

Un moyen d'acquisition d'image numérique, ici une caméra linéaire 7, est disposé en regard des moyens d'éclairage 9 et écarté par rapport auxdits moyens d'éclairage de manière à laisser un espace de défilement de la piste sonore optique entre les moyens d'éclairage 9 et la caméra linéaire 7. La caméra linéaire 7 est montée sur un socle 70 dont la distance par rapport à la source lumineuse 9 est réglable pour la mise au point de la caméra et le centrage de la caméra par rapport à la piste sonore de la bande ou encore pour régler l'azimut.

Les moyens de défilement de la bande comprennent des moyens de guidage de la bande suivant un chemin de guidage passant notamment entre la caméra linéaire 7 et les moyens d'éclairage 9. Les moyens de guidage comprennent deux bobines rotatives 50 formant les extrémités du chemin de guidage. Une bobine permet de dérouler la bande et l'autre bobine de la ré-enrouler. Des poulies ou axes de renvoi permettent de définir le chemin de guidage souhaité de la bande. La bande est ainsi montée à l'état initialement enroulé sur la bobine débitrice et une portion d'extrémité de la bande est agencée le long du chemin de guidage pour être fixée à la bobine de rembobinage au bout du chemin de guidage. Le dispositif comporte également des moyens de commande de la rotation des bobines pour piloter le déplacement de la bande le long du chemin de guidage. Lesdits moyens de commande permettent également de gérer la vitesse de défilement de la bande devant la caméra linéaire.

Ainsi, la bande est déplacée le long de son chemin de guidage pour défiler entre les moyens d'éclairage et la caméra linéaire de sorte que la piste sonore optique soit « lue », c'est-à-dire son image acquise, par la caméra linéaire ligne par ligne. Le flux lumineux reçu par la caméra linéaire à travers la piste sonore optique est converti et mémorisé au format numérique dans une mémoire. A cet effet le dispositif comprend un système de calcul et de traitement électronique et/ou informatique, appelé station de travail 6, par exemple un micro-ordinateur en liaison avec la caméra linéaire 7.

Le système de traitement électronique et/ou informatique comprend également un logiciel de traitement conçu pour mettre en oeuvre les étapes du procédé de restitution décrit ci-dessus. Les différents gabarits et fonctions de pondération sont mémorisés dans une bibliothèque de données.

La présente invention n'est nullement limitée aux modes de réalisation décrits et représentés, mais l'homme du métier saura y apporter toute variante conforme à la définition selon les revendications. Le procédé selon l'invention s'applique également à des pistes sonores modulées en largeur de manière asymétrique. Dans ce cas le gabarit est également asymétrique.

## Revendications

1. Procédé de restitution d'un signal sonore numérique et/ou d'une piste sonore numérique à partir d'une image numérique acquise d'une piste sonore (1) optique, ladite image numérique de la piste sonore (1) étant formée d'une série de lignes (10, 11) de pixels juxtaposées qui s'étendent transversalement à l'axe de la piste sonore (1),
**caractérisé en ce qu'**il comprend :
- pour chaque ligne (10, 11) de l'image acquise de la piste sonore, une étape de comparaison selon au moins un critère prédéfini, de ladite ligne (10, 11) avec chaque ligne (20, 21) dite idéale d'un gabarit (2) numérique formé d'une pluralité de lignes idéales correspondant à des lignes de piste sonore considérées comme idéales, et, en fonction au moins des résultats de comparaison entre ladite ligne (10, 11) de l'image acquise de la piste sonore et les lignes idéales (20, 21) du gabarit, une étape de sélection de l'une desdites lignes idéales (20, 21),
- une étape de restitution selon laquelle, chaque ligne idéale du gabarit étant associée à un échantillon sonore numérique spécifique, on restitue un signal sonore numérique composé des échantillons sonores numériques associés à l'ensemble des lignes idéales sélectionnées du gabarit,
et/ou une étape de restitution selon laquelle on restitue une image numérique, dite idéale, de piste sonore composée de l'ensemble des lignes idéales sélectionnées du gabarit.

2. Procédé selon la revendication 1, **caractérisé en ce qu'**au moins une partie, de préférence chacun, des pixels de l'image acquise de la piste sonore est affecté d'une valeur de niveau de gris comprise dans une plage de valeurs comprenant plus de deux niveaux de gris.

3. Procédé selon la revendication 2, **caractérisé en ce qu'**il comprend, avant l'étape de comparaison de lignes, une étape d'ajustement entre, d'une part, l'histogramme de niveaux de gris de l'image acquise de la piste sonore (1), ou de ladite ligne (10, 11) de l'image acquise de la piste sonore (1), et, d'autre part, un histogramme de niveaux de gris de référence correspondant, de préférence, à l'histogramme de niveaux de gris du gabarit (2), ou de ladite ligne (20, 21) du gabarit (2).

4. Procédé selon l'une des revendications précédentes, **caractérisé en ce que** la comparaison d'une ligne (10, 11) de l'image acquise de la piste sonore (1) avec une ligne idéale (20, 21) du gabarit (2) est réalisée en comparant au moins une partie des pixels, de préférence les pixels, de ladite ligne (10, 11) de la piste sonore (1) avec les pixels correspondants de ladite ligne idéale (20, 21) du gabarit (2).

5. Procédé selon la revendication 4, **caractérisé en ce que** le résultat de la comparaison entre un pixel d'une ligne (10, 11) d'image de la piste sonore et le pixel correspondant d'une ligne idéale (20, 21) du gabarit étant une valeur numérique, celle-ci est pondéré par une fonction de pondération.

6. Procédé selon la revendication 5, **caractérisé en ce que** la fonction de pondération prend en compte des données d'une ou d'au moins une partie des lignes d'image de la piste sonore, voisine(s) de la ligne d'image de la piste sonore en cours de comparaison et/ou des données d'au moins un modèle de ligne prédéfini.

7. Procédé selon l'une des revendications précédentes, **caractérisé en ce que** la piste sonore (1) dont l'image est acquise est une piste, dite à largeur variable, dont le signal audio est modulé en largeur,
et **en ce que** les lignes du gabarit (2) correspondent à des lignes de piste à largeur variable considérées comme idéales.

8. Procédé selon la revendication 7, **caractérisé en ce que** l'ensemble des pixels formant chaque ligne du gabarit (2) présente un profil de niveaux de gris en forme générale de trapèze isocèle.

9. Procédé selon l'une des revendications 1 à 6, **caractérisé en ce que** la piste sonore (1') dont l'image est acquise est une piste, dite à densité variable, dont le signal audio est modulé en densité,
et **en ce que** les lignes du gabarit (2') correspondent à des lignes de piste à densité variable considérées comme idéales.

10. Dispositif de restitution d'un signal sonore numérique et/ou d'une piste sonore numérique à partir d'une image numérique acquise d'une piste sonore (1) optique, ladite image numérique de la piste sonore (1) étant formée d'une série de lignes (10, 11) de pixels juxtaposées qui s'étendent transversalement à l'axe de la piste sonore (1),
**caractérisé en ce qu'**il comporte un système de traitement électronique et/ou informatique comprenant :
- des moyens de comparaison aptes à, pour chaque ligne (10, 11) de l'image acquise de la piste sonore, comparer selon au moins un critère prédéfini, ladite ligne (10, 11) avec chaque ligne (20, 21) dite idéale d'un gabarit (2) numérique formé d'une pluralité de lignes idéales correspondant à des lignes de piste sonore considérées comme idéales, et,
- des moyens de sélection aptes à, pour chaque ligne (10, 11) de l'image acquise de la piste sonore et en fonction au moins des résultats de comparaison entre ladite ligne (10, 11) de l'image acquise de la piste sonore et les lignes idéales (20, 21) du gabarit, sélectionner l'une desdites lignes idéales (20,21),
- des moyens de restitution configurés pour, chaque ligne idéale du gabarit étant associée à un échantillon sonore numérique spécifique, restituer un signal sonore numérique composé des échantillons sonores numériques associés à l'ensemble des lignes idéales sélectionnées du gabarit,
et/ou, pour restituer une image numérique, dite idéale, de piste sonore composée de l'ensemble des lignes idéales sélectionnées du gabarit.

11. Dispositif selon la revendication 10, **caractérisé en ce que** ledit dispositif comprend des moyens d'affectation à au moins une partie, de préférence à chacun, des pixels de l'image acquise de la piste sonore d'une valeur de niveau de gris comprise dans une plage de valeurs comprenant plus de deux niveaux de gris.

12. Dispositif selon l'une des revendications 10 ou 11, **caractérisé en ce que** ledit dispositif comprend des moyens d'ajustement configurés pour, avant l'étape de comparaison de lignes, réaliser un ajustement entre, d'une part, l'histogramme de niveaux de gris de l'image acquise de la piste sonore (1), ou de ladite ligne (10, 11) de l'image acquise de la piste sonore (1), et, d'autre part, un histogramme de niveaux de gris de référence correspondant, de préférence, à l'histogramme de niveaux de gris du gabarit (2), ou de ladite ligne (20, 21) du gabarit (2).

13. Dispositif selon l'une des revendications 10 à 12, **caractérisé en ce que** lesdits moyens de comparaison sont configurés pour comparer au moins une partie des pixels, de préférence les pixels, de ladite ligne (10, 11) de la piste sonore (1) avec les pixels correspondants de ladite ligne idéale (20, 21) du gabarit (2).

14. Dispositif selon l'une des revendications 10 à 13, **caractérisé en ce que**, le résultat de la comparaison entre un pixel d'une ligne (10, 11) d'image de la piste sonore et le pixel correspondant d'une ligne idéale (20, 21) du gabarit étant une valeur numérique, ledit dispositif comprend des moyens de pondération de ladite valeur numérique.

15. Dispositif selon la revendication 14, **caractérisé en ce que** lesdits moyens de pondération sont configurés pour prendre en compte des données d'une ou d'au moins une partie des lignes d'image de la piste sonore, voisine(s) de la ligne d'image de la piste sonore en cours de comparaison et/ou des données d'au moins un modèle de ligne prédéfini.

## Patentansprüche

1. Verfahren zur Wiedergabe eines digitalen Tonsignals und/oder einer digitalen Tonspur ausgehend von einem digitalen Bild einer optischen Tonspur (1), wobei das digitale Bild der Tonspur (1) von einer Reihe nebeneinanderliegender Pixellinien (10, 11) gebildet ist, die sich transversal zur Achse der Tonspur (1) erstrecken,
**dadurch gekennzeichnet, dass** es umfasst:
- für jede Linie (10, 11) des aufgenommenen Bilds von der Tonspur einen Vergleichsschritt gemäß mindestens einem vorbestimmten Kriterium der Linie (10, 11) mit jeder idealen Linie (20, 21) eines digitalen Modells (2), gebildet von einer Vielzahl idealer Linien, die als ideal betrachteten Tonspurlinien entsprechen, und, in Abhängigkeit mindestens der Vergleichsergebnisse zwischen der Linie (10, 11) des aufgenommenen Bilds von der Tonspur und den idealen Linien (20, 21) des Modells, einen Auswahlschritt einer der idealen Linien (20, 21),
- einen Wiedergabeschritt, gemäß dem, wobei jede ideale Linie des Modells einer speziellen digitalen Tonprobe zugeordnet ist, eine Wiedergabe eines digitalen Tonsignals, zusammengesetzt aus digitalen Tonproben, die der Gesamtheit der ausgewählten idealen Linien des Modells zugeordnet sind, erfolgt,
und/oder einen Wiedergabeschritt, gemäß dem eine Wiedergabe eines idealen digitalen Bilds der Tonspur, zusammengesetzt aus der Gesamtheit der ausgewählten idealen Linien des Modells, erfolgt.

2. Verfahren nach Anspruch 1, **dadurch gekennzeichnet, dass** für mindestens einen Teil, vorzugsweise jedes der Pixel des aufgenommenen Bilds von der Tonspur, ein Graustufenwert angenommen wird, der sich in einem Wertebereich befindet, welcher mehr ls zwei Graustufen umfasst.

3. Verfahren nach Anspruch 2, **dadurch gekennzeichnet, dass** es vor dem Vergleichsschritt von Linien einen Anpassungsschritt zwischen zum einen dem Graustufenhistogramm des aufgenommenen Bilds von der Tonspur (1) oder der Linie (10, 11) des aufgenommenen Bilds von der Tonspur (1) und zum anderen einem entsprechenden Referenz-Graustufenhistogramm vorzugsweise mit dem Graustufenhistogramm des Modells (2) oder der Linie (20, 21) des Modells (2) umfasst.

4. Verfahren nach einem der vorangehenden Ansprüche, **dadurch gekennzeichnet, dass** der Vergleich einer Linie (10, 11) des aufgenommenen Bilds von der Tonspur (1) mit einer idealen Linie (20, 21) des Modells (2) durch Vergleichen mindestens eines Teils der Pixel, vorzugsweise der Pixel, der Linie (10, 11) der Tonspur (1) mit den entsprechenden Pixeln der idealen Linie (20, 21) des Modells (2), durchgeführt wird.

5. Verfahren nach Anspruch 4, **dadurch gekennzeichnet, dass** das Ergebnis des Vergleichs zwischen einem Pixel einer Bildlinie (10, 11) der Tonspur und dem entsprechenden Pixel einer idealen Linie (20, 21) des Modells ein digitaler Wert ist, der mit einer Gewichtungsfunktion gewichtet wird.

6. Verfahren nach Anspruch 5, **dadurch gekennzeichnet, dass** die Gewichtungsfunktion Daten einer oder mindestens eines Teils der Bildlinien der Tonspur neben der Bildlinie der im Vergleich begriffenen Bildlinie der Tonspur und/oder Daten mindestens eines vorbestimmten Linienmodells berücksichtigt.

7. Verfahren nach einem der vorangehenden Ansprüche, **dadurch gekennzeichnet, dass** die Tonspur (1), deren Bild aufgenommen ist, eine Spur mit variabler Breite ist, deren Audiosignal in der Breite moduliert ist,
und dass die Linien des Modells (2) Spurlinien mit variabler Breite entsprechen, die als ideal betrachtet werden.

8. Verfahren nach Anspruch 7, **dadurch gekennzeichnet, dass** die Gesamtheit der Pixel, die jede Linie des Modells (2) bilden, ein Graustufenprofil mit der allgemeinen Form eines gleichschenkligen Trapezes aufweist.

9. Verfahren nach einem der Ansprüche 1 bis 6, **dadurch gekennzeichnet, dass** die Tonspur (1'), deren Bild aufgenommen ist, eine Spur mit variabler Dichte ist, deren Audiosignal in der Dichte moduliert ist,
und dass die Linien des Modells (2') Spurlinien mit variabler Dichte entsprechen, die als ideal betrachtet werden.

10. Vorrichtung zur Wiedergabe eines digitalen Tonsignals und/oder einer digitalen Tonspur ausgehend von einem digitalen Bild einer optischen Tonspur (1), wobei das digitale Bild der Tonspur (1) von einer Reihe nebeneinanderliegender Pixellinien (10, 11) gebildet ist, die sich transversal zur Achse der Tonspur (1) erstrecken,
**dadurch gekennzeichnet, dass** sie ein elektronisches und/oder EDV-Verarbeitungssystem aufweist, umfassend:
- Vergleichsmittel, die imstande sind, für jede Linie (10, 11) des aufgenommenen Bilds von der Tonspur die Linie (10, 11) mit jeder idealen Linie (20, 21) eines digitalen Modells (2), gebildet von einer Vielzahl idealer Linien, die als ideal betrachteten Tonspurlinien entsprechen, gemäß mindestens einem vorbestimmten Kriterium zu vergleichen, und
- Auswahlmittel, die imstande sind, für jede Linie (10, 11) des aufgenommenen Bilds von der Tonspur und in Abhängigkeit von mindestens den Vergleichsergebnissen zwischen der Linie (10, 11) des aufgenommenen Bilds von der Tonspur und den idealen Linien (20, 21) des Modells eine der idealen Linien (20, 21) auszuwählen,
- Wiedergabemittel, die konfiguriert sind, um, wobei jede ideale Linie des Modells einer speziellen digitalen Tonprobe zugeordnet ist, ein digitales Tonsignal, zusammengesetzt aus digitalen Tonproben, die der Gesamtheit der ausgewählten idealen Linien des Modells zugeordnet sind, wiederzugeben,
und/oder, um ein ideales digitales Bild der Tonspur, zusammengesetzt aus der Gesamtheit der ausgewählten idealen Linien des Modells, wiederzugeben.

11. Vorrichtung nach Anspruch 10, **dadurch gekennzeichnet, dass** die Vorrichtung Zuweisungsmittel zu mindestens einem Teil, vorzugsweise zu jedem, der Pixel des aufgenommenen Bilds von der Tonspur eines Graustufenwerts umfasst, der sich in einem Wertebereich befindet, welcher mehr als zwei Graustufen umfasst.

12. Vorrichtung nach einem der Ansprüche 10 oder 11, **dadurch gekennzeichnet, dass** die Vorrichtung Anpassungsmittel umfasst, die konfiguriert sind, um vor dem Linienvergleichsschritt eine Anpassung zwischen zum einen dem Graustufenhistogramm des aufgenommenen Bilds von der Tonspur (1) oder der Linie (10, 11) des aufgenommenen Bilds von der Tonspur (1) und zum anderen einem entsprechenden Referenz-Graustufenhistogramm vorzugsweise mit dem Graustufenhistogramm des Modells (2) oder der Linie (20, 21) des Modells (2) durchzuführen.

13. Vorrichtung nach einem der Ansprüche 10 bis 12, **dadurch gekennzeichnet, dass** die Vergleichsmittel konfiguriert sind, um mindestens einen Teil der Pixel, vorzugsweise die Pixel, der Linie (10, 11) der Tonspur (1) mit den entsprechenden Pixeln der idealen Linie (20, 21) des Modells (2) zu vergleichen.

14. Vorrichtung nach einem der Ansprüche 10 bis 13, **dadurch gekennzeichnet, dass** das Ergebnis des Vergleichs zwischen einem Pixel einer Bildlinie (10, 11) der Tonspur und dem entsprechenden Pixel einer idealen Linie (20, 21) des Modells ein digitaler Wert ist, wobei die Vorrichtung Gewichtungsmittel des digitalen Werts umfasst.

15. Vorrichtung nach Anspruch 14, **dadurch gekennzeichnet, dass** die Gewichtungsmittel konfiguriert sind, um Daten einer oder mindestens eines Teils der Bildlinien der Tonspur neben der Bildlinie der im Vergleich begriffenen Bildlinie der Tonspur und/oder Daten mindestens eines vorbestimmten Linienmodells zu berücksichtigen.

## Claims

1. A method for reproducing a digital audio signal and/or a digital audio track from an acquired digital image of an optical audio track (1), said digital image of the audio track (1) being formed by a series of juxtaposed lines (10, 11) of pixels that extend transversely to the axis of the audio track (1),
**characterized in that** it comprises:
- for each line (10, 11) of the acquired image of the audio track, a step for comparing, according to at least one predefined criterion, said line (10, 11) with each so-called ideal line (20, 21) of a digital template (2) made up of a plurality of ideal lines corresponding to audio track lines considered to be ideal, and, based on at least the results of the comparison between said line (10, 11) of the acquired image of the audio track and the ideal lines (20, 21) of the template, a step for selecting one of said ideal lines (20, 21),
- a reproduction step during which, each ideal line of the template being associated with a specific digital audio sample, a digital audio signal is reproduced made up of digital audio samples associated with all of the selected ideal lines of the template,
and/or a reproduction step in which a so-called ideal digital image is reproduced of an audio track made up of all of the selected ideal lines of the template.

2. The method according to claim 1, **characterized in that** at least some, preferably each, of the pixels of the acquired image of the audio track are assigned a gray level value comprised in a value range comprising more than two gray levels.

3. The method according to claim 2, **characterized in that** it comprises, before the step for comparing lines, an adjustment step between the gray level histogram of the acquired image of the audio track (1), or said line (10, 11) of the acquired image of the audio track (1), on the one hand, and a reference gray level histogram preferably corresponding to the gray level histogram of the template (2), or of said line (20, 21) of the template (2), on the other hand.

4. The method according to one of the preceding claims, **characterized in that** the comparison of a line (10, 11) of the acquired image of the audio track (1) with an ideal line (20, 21) of the template (2) is done by comparing at least some of the pixels, preferably all of the pixels, of said line (10, 11) of the audio track (1) with the corresponding pixels of said ideal line (20, 21) of the template (2).

5. The method according to claim 4, **characterized in that** the result of the comparison between a pixel of an image line (10, 11) of the audio track and the corresponding pixel of an ideal line (20, 21) of the template being a numerical value, this value is weighted by a weight function.

6. The method according to claim 5, **characterized in that** the weight function accounts for data from one or at least part of the image lines of the audio track, adjacent to the image line of the audio track being compared and/or data from at least one predefined line model.

7. The method according to one of the preceding claims, **characterized in that** the audio track (1) whereof the image is acquired is a so-called variable-width track, the audio signal of which is width-modulated,
and **in that** the lines of the template (2) correspond to variable-width track lines considered to be ideal.

8. The method according to claim 7, **characterized in that** the set of pixels making up each line of the template (2) has a gray level profile generally in the shape of an isosceles trapezoid.

9. The method according to one of claims 1 to 6, **characterized in that** the audio track (1') whereof the image is acquired is a so-called variable-density track, the audio signal of which is density-modulated,
and **in that** the lines of the template (2') correspond to variable-density track lines considered to be ideal.

10. A device for reproducing a digital audio signal and/or a digital audio track from an acquired digital image of an optical audio track (1), said digital image of the audio track (1) being made up of a series of juxtaposed lines (10, 11) of pixels that extend transversely to the axis of the audio track (1),
**characterized in that** it includes an electronic and/or computerized processing system comprising:
- comparison means able, for each line (10, 11) of the acquired image of the audio track, to compare, according to at least one predefined criterion, said line (10, 11) with each so-called ideal line (20, 21) of a digital template (2) made up of a plurality of ideal lines corresponding to audio track lines considered to be ideal, and
- selection means able, for each line (10, 11) of the acquired image of the audio track and based at least on the comparison results between said line (10, 11) of the acquired image of the audio track and the ideal lines (20, 21) of the template, to select one of said ideal lines (20, 21),
- reproduction means configured, each ideal line of the template being associated with a specific digital audio sample, to reproduce a digital audio signal made up of digital audio samples associated with all of the selected ideal lines of the template,
and/or to reproduce a so-called ideal audio track digital image made up of the set of ideal lines selected from the template.

11. The device according to claim 10, **characterized in that** said device comprises means for assigning at least some, preferably each, of the pixels of the acquired image of the audio track a gray level value comprised in a value range comprising more than two gray levels.

12. The device according to one of claims 10 or 11, **characterized in that** said device comprises adjustment means configured so as, before the line comparison step, to perform an adjustment between the gray level histogram of the acquired image of the audio track (1), or of said line (10, 11) of the acquired image of the audio track (1), on the one hand, and a reference gray level histogram preferably corresponding to the gray level histogram of the template (2), or of said line (20, 21) of the template (2), on the other hand.

13. The device according to one of claims 10 to 12, **characterized in that** said comparison means are configured to compare at least some of the pixels, preferably all of the pixels, of said line (10, 11) of the audio track (1) with the corresponding pixels of said ideal line (20, 21) of the template (2).

14. The device according to one of claims 10 to 13, **characterized in that**, the result of the comparison between a pixel of an image line (10, 11) of the audio track and the corresponding pixel of an ideal line (20, 21) of the template being a numerical value, said device comprises means for weighting said numerical value.

15. The device according to claim 14, **characterized in that** said weighting means are configured to take into account data from one or at least one part of the image lines of the audio track, adjacent to the image line of the audio track being compared and/or data from at least one predefined line model.
